# EUROPEAN PATENT APPLICATION

(11) **EP 2 461 051 A1**
(43) Date of publication of application: **06.06.2012**
(21) Application number: 10804550.1
(22) Date of filing: 30.07.2010
(51) Int. Cl.: F16B 19/10

(54) **PUSH RIVET**

(30) Priority: 31.07.2009 JP 2009179223
(71) Applicant: Nifco INC., Yokohama-shi, Kanagawa 244-8522 (JP)
(72) Inventor: HARADA Kiyotsugu, Yokohama-shi Kanagawa 244-8522 (JP)
(74) Representative: Gassner, Wolfgang
(86) International application number: PCT/JP2010/062907
(87) International publication number: WO 2011/013804

(57) **Abstract**

A push rivet is molded in a shape to be difficult for a foreign material to enter into an inside when an attached member is fixed, and includes a rivet main body and a pin. The rivet main body includes at least a flange portion having an insertion hole, a connected leg portion in which a pair of legs projecting toward an end side from the flange portion is mutually connected in the end side, protection pieces provided to protrude toward a space between a pair of legs from a pair of legs in the connected leg portion to protect the foreign material from entering, at least a pair of split leg portions projecting toward the end side from the flange portion to form slits between the split leg portions and the connected leg portion, and bulging-out portions projecting toward an inside direction of the connected leg portion and the split leg portions, and having tapered surfaces inclining inward as the tapered surfaces head for ends. The pin includes at least a head portion fitted into the flange portion, a shaft portion projecting toward the end side from the head portion, and which is provided with cavities on an inside, corner portions provided at side surfaces of the shaft portion, and slidably fitting into the slits, and concave grooves enlarging a diameter of the connected leg portion by engaging with the bulging-out portions of the respective leg portions.

## Description

### FIELD OF TECHNOLOGY

The present invention relates to a push rivet which makes it difficult for a foreign material such as gravel and the like to enter into an inside, and even if the foreign material enters, when a pin is pulled out of a rivet main body, the foreign material can be easily removed. The present invention relates to the push rivet in which an attached member can be attached by fitting and inserting the rivet main body into an insertion hole provided in two attached members, and after that, by pressing and inserting the pin into a hole of the rivet main body to laterally press a leg portion of the rivet main body apart.

### BACKGROUND ART

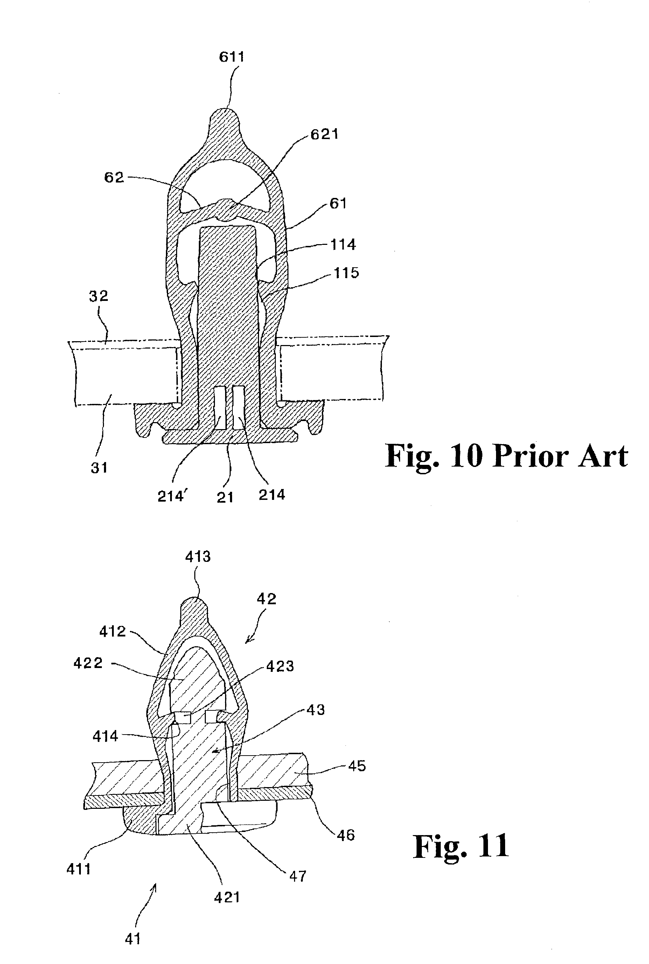

Fig. 11 is a view for explaining a state wherein a conventional push rivet is attached to the attached member. For the conventional push rivet, there is a type described in, for example, Japanese Unexamined Patent Publication No. H05-302609. In Fig. 11, a push rivet 41 comprises at least a female member 42 and a male member 43. The female member 42 comprises a connected leg portion 412 which is inserted into an attachment hole 47 formed in panels 45 and 46; and a locking projection 414 projecting toward an inside of the connected leg portion 412 and including a tapered surface. The male member 43 comprises a shaft portion 422 pressed and inserted into a pin approach hole 47 molded in the connected leg portion 412; and a concave portion 423 molded in the shaft portion 422 and in which the locking projection 414 provided on an inner side of the connected leg portion 412 is locked in.

As for the push rivet 41, after the connected leg portion 412 is inserted into the attachment hole 47 formed in the panels 45 and 46, the shaft portion 43 of the pin is pressed and inserted into the inside of the connected leg portion 412. The locking projection 414 including the tapered surface presses the connected leg portion 412 outward, so that the connected leg portion 412 is connected to the panels 45 and 46.

### PRIOR ART DOCUMENT

### PATENT DOCUMENT

Patent Document 1: Japanese Unexamined Patent Publication No. H05-302609

### SUMMARY OF THE INVENTION

### PROBLEMS TO BE SOLVED BY THE INVENTION

As described above, the push rivet 41 shown in Fig. 11 can be attached to the panels 45 and 46 by pressing and inserting the male member 43 into the female member 42 which has been inserted through the panels 45 and 46. However, in a case where the male member 43 is desired to be removed from the female member 42, if the foreign material such as the gravel and the like is attached, there has been a problem that the foreign material can not be easily removed. Also, in a case where the push rivet 41 is used at a place such as a fender, a tire house, a bumper, and the like, the push rivet 41 can be attached upward from a lower side. Thereby, there are many cases where the push rivet 41 which is used at the aforementioned places is exposed to wind and rain, so that the gravel, mud, moisture, and the like attached to the push rivet 41 become a mortar state and dry to be attached, or entered into a gap. Thereby, at a time of the aforementioned state, there has been a problem that the male member cannot be removed from the female member of the push rivet 41.

In order to solve the aforementioned problem, an object of the present invention is to provide a push rivet which makes it difficult for the foreign material such as the gravel and the like to enter into the rivet main body and the pin by providing protection pieces inside split leg portions. Also, the present invention has an object to provide a push rivet with a shape which makes it easy for the attached foreign material such as the gravel and the like to be detached when the pin is pulled out of the rivet main body. Furthermore, the present invention has an object to provide a push rivet which can easily eliminate the foreign material such as the gravel and the like entered into the pin, and which has a structure wherein the foreign material can be easily detached when the pin is pulled out of the split leg portions of the rivet main body.

### MEANS FOR SOLVING THE PROBLEMS

The first aspect of a push rivet of the present invention is the push rivet for fixing an attached member, and comprises a rivet main body and a pin. The rivet main body comprises at least a flange portion having an insertion hole; a connected leg portion in which a pair of legs projecting toward an end side from the flange portion is mutually connected on the end side; a protection piece provided to protrude toward a space between a pair of legs from a pair of legs in the connected leg portion to protect a foreign material from entering; at least a pair of split leg portions projecting toward the end side from the flange portion to form a slit between the split leg portions and the connected leg portion; and a bulging-out portion provided to protrude to an inner side from the connected leg portion and the split leg portions, and including a tapered surface inclining to jut into the inner side as the tapered surface heads for the end side. The pin comprises at least a head portion fitted into the flange portion; a shaft portion provided to protrude toward the end side from the head portion, and also in which a cavity is provided on an inside; a corner portion provided at a side surface of the shaft portion, and slidably fitting into the slit; and a concave groove enlarging a diameter of the connected leg portion by engaging with the bulging-out portion of the aforementioned respective leg portion.

Also, in the push rivet, preferably, the aforementioned protection piece comprises a bulging large portion on an inside of the connected leg portion.

Also, in the push rivet, preferably, a plurality of protection pieces is provided on the inside of the connected leg portion.

Also, in the push rivet, preferably, the protection piece is provided at a position having a different height in the connected leg portion.

Also, in the push rivet, preferably, the protection piece has elasticity to not interfere with a deformation of the connected leg portion.

Also, in the push rivet, preferably, the protection piece is provided with a projection on a lower surface of an upper portion side and on an upper surface of a lower portion side.

Also, in the push rivet, preferably, the protection piece is mutually connected, and integrally molded on the inside of the connected leg portion.

### EFFECT OF THE INVENTION

According to the push rivet of the present invention, the protection piece is provided on the inside of the connected leg portion to have a structure which makes it difficult for the foreign material such as gravel and the like to enter into the rivet main body and the pin.

Also, according to the push rivet of the present invention, in the connected leg portion and the split leg portions, there is molded the bulging-out portion including the tapered surface inclining to jut into the inner side as the tapered surface heads for the end side, so that the bulging-out portion engages the concave groove molded in the pin, and presses the connected leg portion apart to be easily fixed to the insertion hole of the attached member.

Also, according to the push rivet of the present invention, in the shaft portion of the pin, there is provided the cavity passing through a lateral direction of the inside to have a structure which can easily detach the foreign material and easily eliminate the foreign material from the cavity when the shaft portion is pulled out, even if the foreign material such as the gravel and the like has entered into the inside.

Also, when the pin is pulled out of the rivet main body, the push rivet of the present invention has a structure in which the gravel and the like can be easily detached, and easily removed due to a structure of the slit provided by the connected leg portion and the split leg portions.

Also, according to the push rivet of the present invention, the protection piece is provided at a position mutually opposed on the inside of the connected leg portion, so that a connecting strength due to an elastic force when the rivet main body and the pin are connected in the push rivet, can be set in an intended hardness.

### BRIEF DESCRIPTION OF THE DRAWINGS

Fig. 1 is a drawing of a rivet main body 11 constituting a push rivet, which is one example of an embodiment of the present invention, and viewed from a direction perpendicular to a longitudinal direction thereof.
Fig. 2 is a drawing of the rivet main body 11 constituting the push rivet, which is one example of the embodiment of the present invention, and viewed from the direction perpendicular to the longitudinal direction thereof.
Fig. 3 is an overall perspective view of the rivet main body 11.
Fig. 4 is a fragmentary perspective view of the rivet main body 11.
Fig. 5 is a drawing of a pin 21 constituting the push rivet, which is one example of the embodiment of the present invention, and viewed from the direction perpendicular to the longitudinal direction thereof.
Fig. 6 is a drawing of the pin 21 constituting the push rivet, which is one example of the embodiment of the present invention, and viewed from the direction perpendicular to the longitudinal direction thereof.
Fig. 7 is a plan view of the pin 21.
Fig. 8 is a perspective view of the pin 21.
Fig. 9 is a cross-sectional view showing a state wherein the pin 21 is pressed and inserted into the rivet main body 11 which is fitted and inserted into panels 31 and 32.
Fig. 10 is a cross-sectional view showing a state wherein protection pieces provided in the rivet main body constituting the push rivet, which is another example of the embodiment of the present invention, are mutually connected.
Fig. 11 is a drawing for explaining a state wherein a conventional push rivet is attached to an attached member.

### EMBODIMENTS FOR CARRYING OUT THE INVENTION

Hereinafter, although the present invention is explained through embodiments of the present invention, the following embodiments do not limit the invention according to a scope of claims. Also, all combinations of characteristics explained in the embodiments are not necessarily essential for means for solving the problems in the invention.

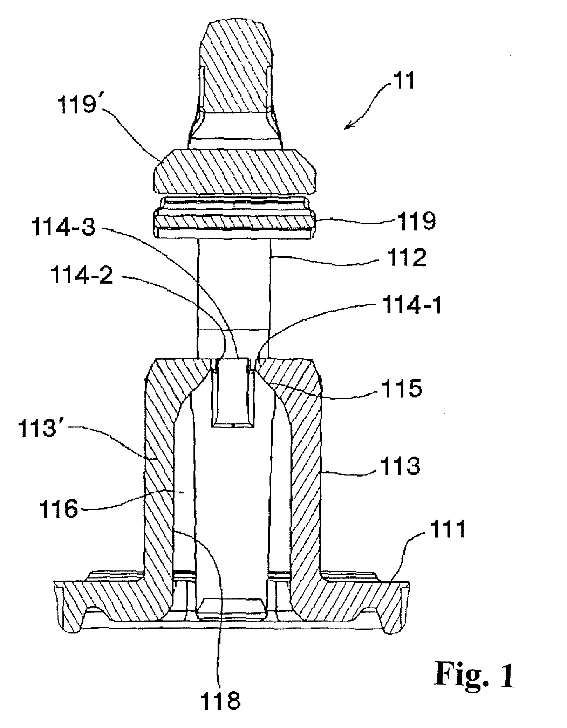

A push rivet which is one example of the embodiment of the present invention will be explained with reference to Figs. 1 to 9. For example, the push rivet of the present example is an attachment tool which is used for attaching attached members such as a fender, a tire house, bumper, and the like of a vehicle to a body. Especially, the push rivet is used at a place which is exposed to wind and rain, or mud, dust, or the like in the aforementioned attached members. As explained below, the push rivet of the present example has a shape to be difficult for a foreign material such as gravel and the like to enter into an inside of the push rivet, and also even if the foreign material is entered, when the push rivet is removed from the attached members, the push rivet has a shape which can easily eliminate the foreign material.

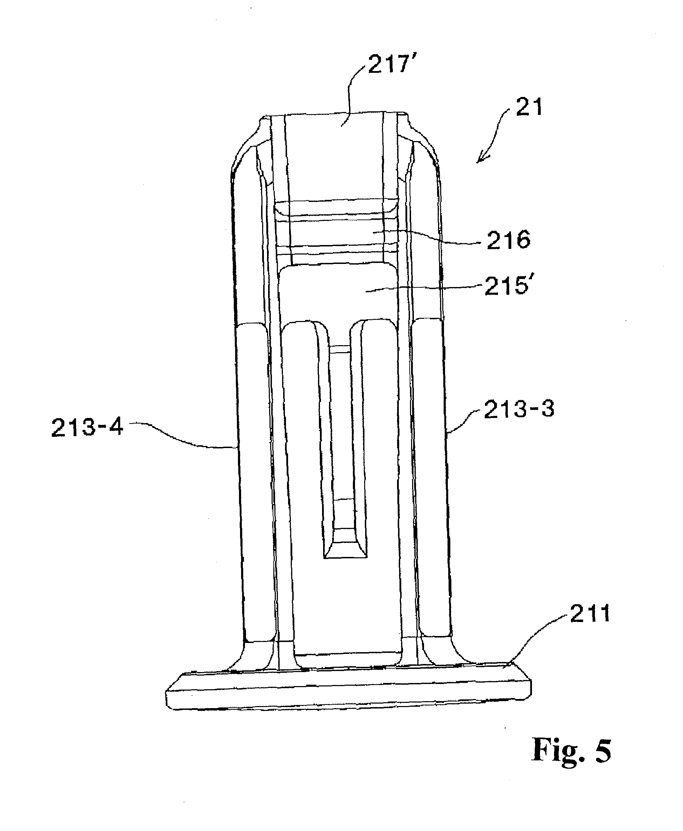

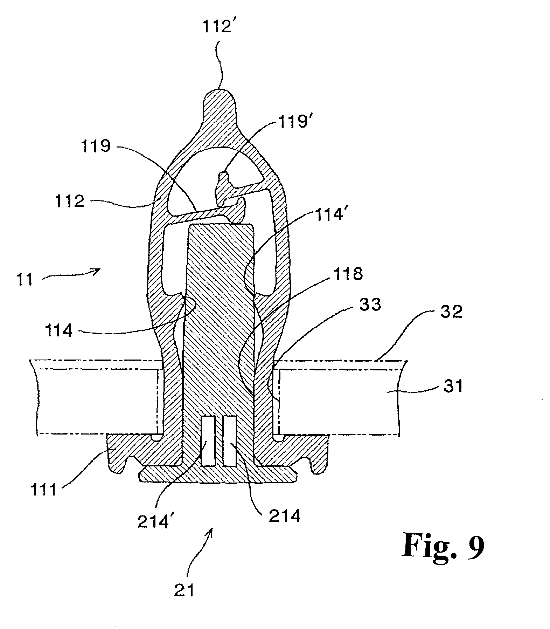

The push rivet of the present example comprises a rivet main body 11 (see Figs. 1 to 4) and a pin 21 (see Figs. 5 to 8) which is pressed and inserted into the rivet main body 11. After the rivet main body 11 is fitted and inserted into through holes 33 provided in overlaid panels 31 and 32, which are one example of the attached members, as attachment holes of the push rivet, the pin 21 is pressed and inserted into an insertion hole 118 of the rivet main body 11, so that two panels 31 and 32 are mutually fixed (see Fig. 9).

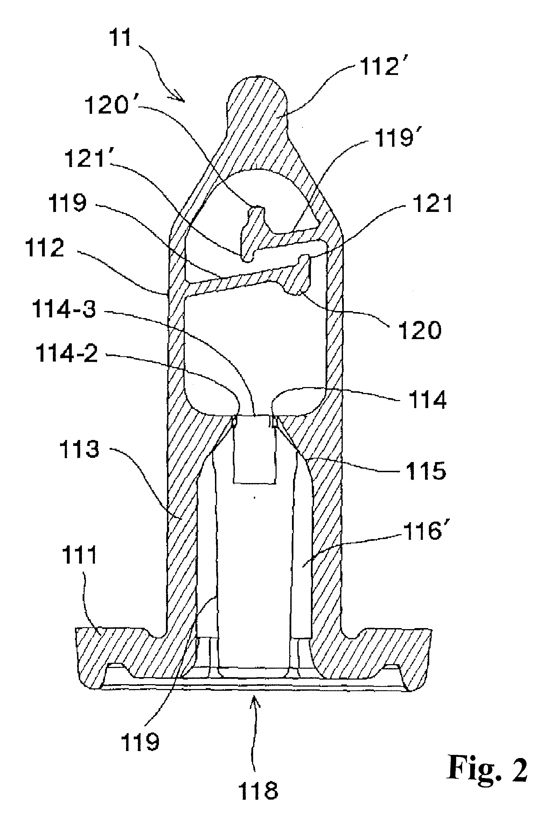

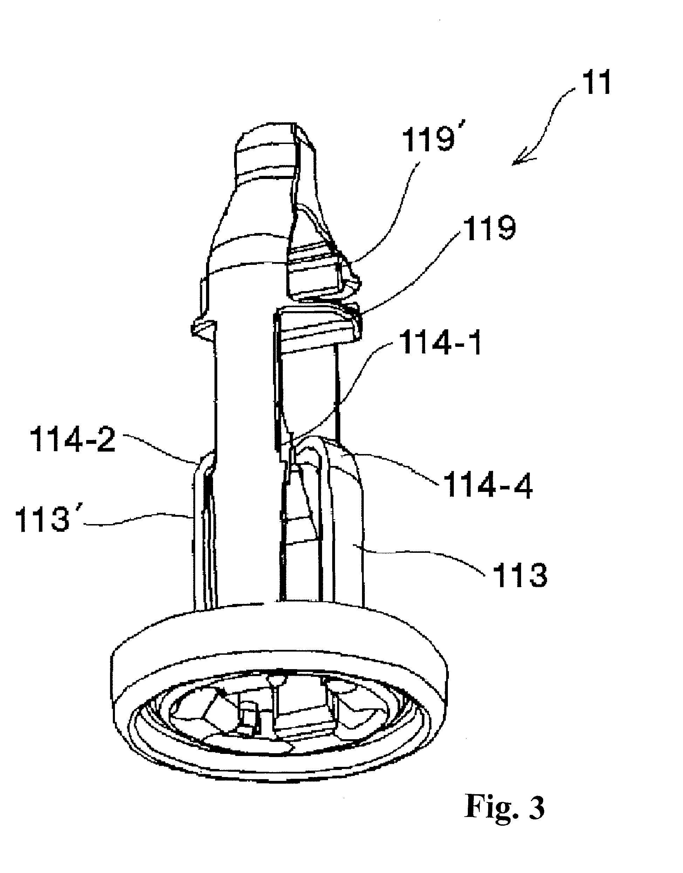

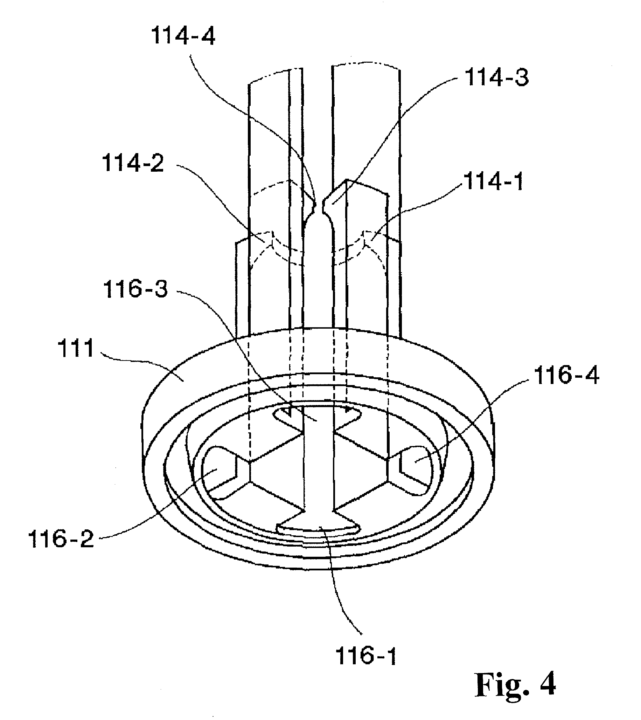

Figs. 1 and 2 are drawings of the rivet main body 11 constituting the push rivet, which is one example of the embodiment of the present invention, viewed from a direction perpendicular to a longitudinal direction thereof, and respectively viewed from different directions. Incidentally, Figs. 1 and 2 show one portion of the rivet main body 11 with cross-sectional views. Fig. 3 is an overall perspective view of the rivet main body 11, and Fig. 4 is a fragmentary perspective view of the rivet main body 11.

As shown in Figs. 1 to 4, the rivet main body 11 includes a flange portion 111; a connected leg portion 112; split leg portions 113 and 113'; and bulging-out portions 114. A plurality of bulging-out portions 114 is provided in the rivet main body 11 as shown in Figs. 1 to 4 by assigning symbols 114-1, 114-2, 114-3, and 114-4, and is formed in the approximately same position.

In a central portion of the flange portion 111, there is provided the insertion hole 118 for pressing and inserting the pin 21 (see Figs. 5 to 8). As shown in Figs. 1 to 4, the connected leg portion 112 has a structure in which a pair of legs, extending toward an end portion of the rivet main body 11 from the flange portion 111, is connected at the end portion. Incidentally, a length, width, thickness, bulge, and the like of a pair of legs in the connected leg portion 112 are determined by considering a spring property when the connected leg portion 112 engages the pin 21. A connected projection 112' is provided to protrude toward the end side at a position of the end portion of the rivet main body 11 in the connected leg portion 112.

On the end side of the connected leg portion 112, there are provided protection pieces 119 and 119' protruding toward a space on an inner side of the connected leg portion 112 from both of a pair of aforementioned legs. The protection pieces 119 and 119' are provided with a size capable of covering the end portion of a shaft portion 212 of the pin 21 (see Figs. 5 to 8), and not only protect the foreign material such as the gravel and the like from entering, but also when the pin 21 is pulled out of the rivet main body 11, the connected leg portion 112 reduces a diameter to deform an external shape, and also the protection pieces 119 and 119' move as well. Thereby, an external force is applied to the gravel and the like which have been attached in a solidified state to allow the connected leg portion 112 to be in a state of being easily pulled out.

The protection pieces 119 and 119' have planar surfaces of, for example, the nearly same size as the end portion of the pin 21, or a slightly larger size than the end portion of the pin 21. On an end portion of the protection piece 119, there are provided a bulging large portion 120 protruding to a flange portion 111 side, and a small projection 121 protruding to the end side of the rivet main body 11. Also, on an end portion of the protection piece 119', there are provided a small projection 121' protruding to the flange portion 111 side, and a bulging large portion 120' protruding to the end side of the rivet main body 11.

When the pin 21 is pressed and inserted into the rivet main body 11, the protection pieces 119 and 119' cover the end portion of the pin 21, and also the small projections 121 and 121' contact to prevent the foreign material from entering between the pin 21 and the rivet main body 11. Also, the bulging large portions 120 and 120', and the small projections 121 and 121' elastically deform up to a position before the pin 21 is inserted into the rivet main body 11 when the pin 21 is pulled out of the rivet main body 11 to detach the foreign material such as the gravel and the like attached near the protection pieces 119 and 119' at that time.

Incidentally, in the present example, although a case of two pieces of the protection pieces 119 and 119' is shown, the protection pieces may be provided with one piece, or three or more pieces. Also, in a case where the pin 21 is pressed and inserted into the rivet main body 11, the protection pieces 119 and 119' are pressed up to the end side of the rivet main body 11 by the end portion of the shaft portion 212 of the later-mentioned pin 21. When the pin 21 is pulled out of the rivet main body 11, the protection pieces 119 and 119' return to original positions from a state of being pushed up due to an elastic force. Then, at that time, the bulging large portion 120 or the small projection 121' on ends of the protection pieces 119 and 119' detaches the foreign material and the like which have been attached to the protection piece 119 or the end portion of the pin 21.

The projection pieces 119 and 119' protrude toward an inner side from a position different in the longitudinal direction of the rivet main body 11 and provided to mutually overlap one portion. Then, when the fitting between the rivet main body 11 and the pin 21 is released, the protection pieces 119 and 119' return to an original state from a state of being elastically deformed and at that time, an overlapping state changes to detach the foreign material which has been attached.

The protection pieces 119 and 119' have a degree of elasticity not to interfere with a deformation when the protection pieces 119 and 119' return to the original state from a state of being pressed apart after the connected leg portion 112 is pressed apart by the pin 21, and the pin 21 is pulled out.

The split leg portions 113 and 113' extend as a pair toward the end portion of the rivet main body 11 from a position different from the connected leg portion 112 in the flange portion 111. Then, as shown in Figs. 1 and 2, slits 116 and 116' are formed between a pair of aforementioned legs in the connected leg portion 112 and the split leg portions 113 and 113'. Incidentally, in the present example, a pair of split leg portions 113 and 113' is provided to be adjacent to a pair of respective legs constituting the connected leg portion 112 by leaving a predetermined interval (an interval corresponding to the slits 116 and 116'). However, the split leg portions may be provided with a plurality of pairs between a pair of legs of the connected leg portion 112. Also, in the split leg portions 113 and 113', the bulging-out portions 114 of the connected leg portion 112 are provided to be in the same position in a nearly top portion.

In the respective end portions of the split leg portions 113 and 113', there are formed the bulging-out portions 114-1 and 114-2 protruding to the inner side. Also, the respective bulging-out portions 114-1 and 114-2 include tapered surfaces 115 inclining to the inner side as the tapered surfaces 115 head for an end of the rivet main body 11. Also, in a pair of respective legs constituting the connected leg portion 112, there are formed the bulging-out portions 114-3 and 114-4 protruding to the inner side in a position adjacent to the end portions of the split leg portions 113 and 113'. As is the case with the bulging-out portions 114-1 and 114-2 formed in the end portions of the split leg portions 113 and 113', the respective bulging-out portions 114-3 and 114-4 include the tapered surfaces 115 inclining to the inner side as the tapered surfaces 115 head for the end of the rivet main body 11.

When the attached members are fixed using the push rivet, the bulging-out portions 114-1, 114-2, 114-3, and 114-4, formed in the respective connected leg portion 112 and the split leg portions 113 and 113', engage concave grooves 215 of the after-mentioned pin 21, so that the connected leg portion 112 is pressed apart.

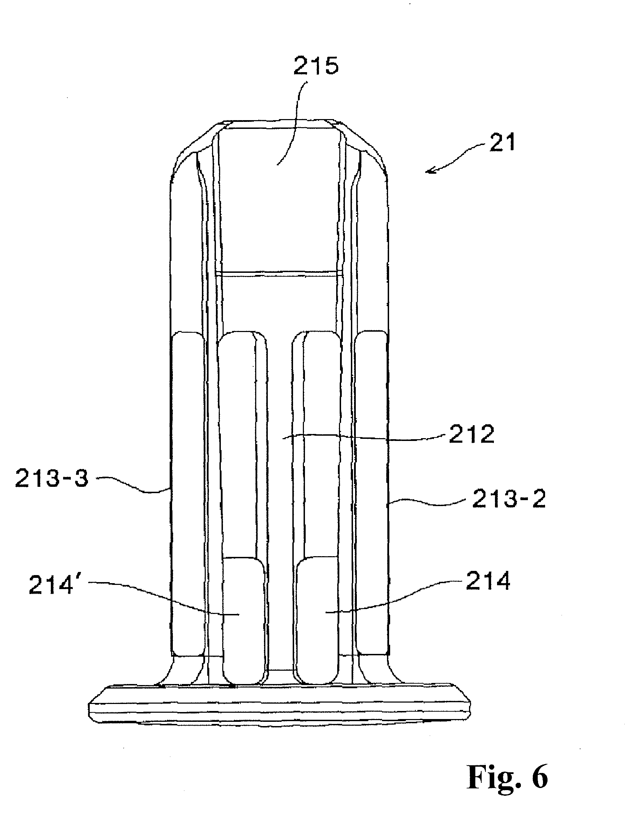

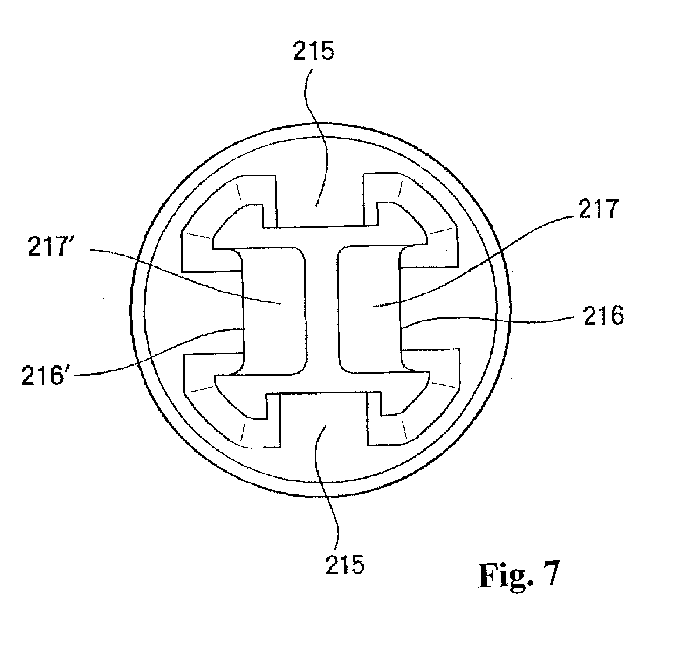

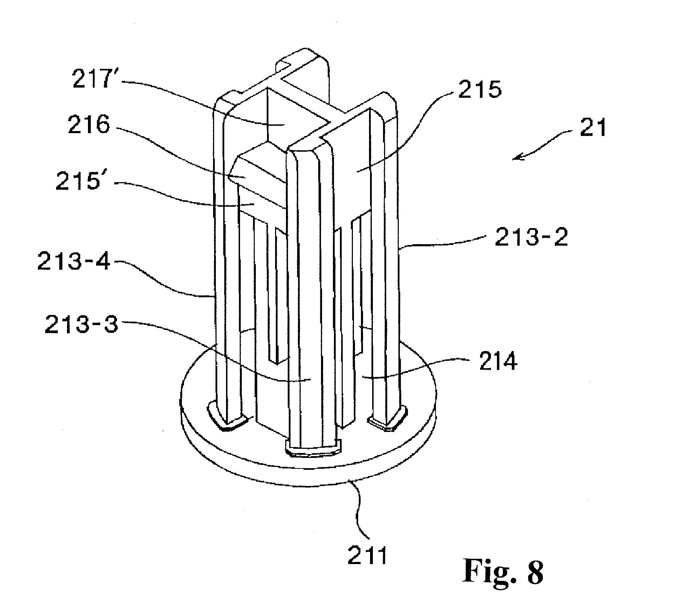

Figs. 5 and 6 are drawings of the pin 21 constituting the push rivet, which is one example of the embodiment of the present invention, and viewed from the direction perpendicular to the longitudinal direction thereof. Fig. 7 is a plan view of the pin 21, and Fig. 8 is a perspective view of the pin 21. As shown in Figs. 5 to 8, the pin 21 includes a head portion 211 and the shaft portion 212. The head portion 211 has a size of a thickness or a diameter thereof corresponding to a depth or a bore diameter of the insertion hole 118 provided in the flange 111 of the rivet main body 11. When the pin 21 is pressed and inserted into the insertion hole 118 of the rivet main body 11, the head portion 211 fits into the insertion hole 118.

The shaft portion 212 extends toward the end portion of the pin 21 from the head portion 211 of the pin 21, and on a head portion 211 side thereof, there are provided cavity portions 214 and 214' passing through in the direction perpendicular to the longitudinal direction of the pin 21. The foreign material such as the gravel and the like which has been entered into an inside of the cavity portions 214 and 214' cannot enter into a back portion of the pin 21 much further. Also, in a case where the pin 21 is removed from the rivet main body 11, the foreign material which has been attached near the cavity portions 214 and 214' can be easily detached, and also the foreign material can be easily eliminated from the cavity portions 214 and 214'.

Also, a cross-sectional surface of the shaft portion 212 has a shape in which corner portions 213-1, 213-2, 213-3, and 213-4 are disposed near four top portions of an approximately square shape, and in which the concave grooves 215 and 215' are provided between the corner portions 213-1, 213-2, 213-3, and 213-4. When the pin 21 is pressed and inserted into the insertion hole 118 of the rivet main body 11, the corner portions 213-1, 213-2, 213-3, and 213-4 slide and fit into the slits 116 of the rivet main body 11, and there are molded the concave grooves 215 and 215' between the corner portions 213-1, 213-2, 213-3, and 213-4.

When the pin 21 is pressed and entered into the rivet main body 11, the shaft portion 212 moves along the slits 116, the connected leg portion 112, and the split leg portions 113 and 113' of the rivet main body 11. Also, at that time, the bulging-out portions 114 of the connected leg portion 112 and the split leg portions 113 and 113' move along the concave grooves 215 and 215' of the shaft portion 212. Also, at that time, the connected leg portion 112 of the rivet main body 11 is pressed apart through the bulging-out portions 114 by the shaft portion 212.

Also, in the shaft portion 212, there are provided projection portions 216 on an end portion side of the pin 21 in the concave grooves 215'. Then, on a further end portion side of the concave grooves 215', there are provided level difference portions 217' concaved to an inner side than the concave grooves 215'. When the pin 21 is pressed and inserted into the rivet main body 11, after the bulging-out portions 114 provided in the connected leg portion 112 move to the end side of the rivet main body 11 along the concave grooves 215' of the shaft portion 212, the bulging-out portions 114 climb over the level difference portions 217' and later, the bulging-out portions 114 fit into the level difference portions 217'. Thereby, the pin 21 is locked to not detach freely from the rivet main body 11. Incidentally, when the pin 21 is pulled out of the rivet main body 11, it is only necessary to apply an external force enough for the bulging-out portions 114 provided in the connected leg portion 112 to climb over the level difference portions 217' to a concave groove 215' side.

A structure and a shape of the rivet main body 11 and the pin 21 are set according to an environment wherein the push rivet is used, and also are set for easily detaching the foreign material when the pin 21 is released from the rivet main body 11.

Fig. 9 is a drawing showing a state wherein the pin 21 is pressed and inserted into the rivet main body 11 which is fitted and inserted into the panels 31 and 32. As shown in Fig. 9, when the push rivet is used for fixing the panels 31 and 32, after the rivet main body 11 is fitted and inserted into the through holes 33 provided in the panels 31 and 32, the pin 21 is pressed and inserted into the rivet main body 11. When the pin 21 is pressed and inserted into the rivet main body 11, the connected leg portion 112 is pressed apart to be capable of mutually fixing the panels 31 and 32.

On inner surfaces of the split leg portions 113 and 113' and the connected leg portion 112, there are formed the tapered surfaces 115 which become wider as the tapered surfaces 115 head for the end side of the rivet main body 11. Therefore, when the pin 21 is pulled to a base side of the rivet main body 11, since the interval of the split leg portions 113 and 113' gradually narrows as the interval of the split leg portions 113 and 113' moves toward the base side of the rivet main body 11, a gap between the corner portions 213-1, 213-2, 213-3, and 213-4 of the pin 21 and the slits 116 and 116' gradually increases, so that the foreign material such as the gravel and the like can be easily detached further.

Fig. 10 is a cross-sectional view showing a state wherein the protection pieces provided in the rivet main body constituting the push rivet, which is another example of the embodiment of the present invention, are mutually connected. In a connected leg portion 61 of the rivet main body shown in Fig. 10, there is provided a protection piece 62 on an upper portion of an inner side thereof. As shown in Fig. 10, the protection piece 62 has a mountain shape, and is integrally formed with the connected leg portion 61. Then, in a central portion of the protection piece 62, there is provided a bulging large portion 621. The bulging large portion 621 determines the elasticity of the rivet main body together with a connected projection 611. The protection piece 62 and the connected leg portion 61 provide the elasticity to deform the rivet main body appropriately when the pin is fitted into the rivet main body, or when the pin is pulled out of the rivet main body.

Thus, although the embodiment of the present invention is explained, the present invention is not limited to the embodiments described hereinabove. The present invention can be modified in various designs provided that they do not exceed the content described in the scope of claims. For example, it is obvious that a shape and a material of the rivet main body and the pin constituting the push rivet of the present invention can be modified.

The present application is based on Japanese Patent Applications No. 2009-179223 filed on July 31, 2009, and all contents thereof are incorporated in their entireties herein as references.

### EXPLANATION OF SYMBOLS

- 11: a rivet main body

- 111: a flange
- 112: a connected leg portion
- 112': a connected projection
- 113, 113': split leg portions
- 114: bulging-out portions
- 115: tapered surfaces
- 116: slits
- 118: an insertion hole
- 119, 119': protection pieces
- 120, 120': bulging large portions
- 121, 121': small projections
- 21: a pin
- 211: a head portion
- 212: a shaft portion
- 213: slit fitting projections
- 214: cavity portions
- 215: concave grooves
- 216: projection portions
- 217: level difference portions

## Claims

1. A push rivet molded in a shape to be difficult for a foreign material to enter into an inside thereof when an attached member is attached, comprising:
a rivet main body; and
a pin,
wherein the rivet main body comprises at least:
a flange portion having an insertion hole;
a connected leg portion in which a pair of legs projecting from the flange portion toward an end side is mutually connected in the end side;
protection pieces provided to protrude from the pair of legs of the connected leg portion to a space between the pair of legs to protect the foreign material from entering;
at least a pair of split leg portions projecting from the flange portion toward the end side to form slits between the split leg portions and the connected leg portion; and
bulging-out portions projecting toward an inside of the connected leg portion and the split leg portions, and including tapered surfaces inclining inward as the tapered surfaces head for ends, and
wherein the pin comprises at least:
a head portion to fit with the flange portion;
a shaft portion projecting from the head portion toward the end side, and provided with cavities on an inside;
corner portions provided at side surfaces of the shaft portion, and slidably fitting into the slits; and
concave grooves enlarging a diameter of the connected leg portion by engaging with the bulging-out portions of the respective leg portions.

2. A push rivet according to claim 1, wherein the protection pieces comprise bulging large portions on the inside of the connected leg portion.

3. A push rivet according to claim 1, wherein a plurality of protection pieces is provided on the inside of the connected leg portion.

4. A push rivet according to claim 3, wherein the protection pieces are provided at a position having a different height in the connected leg portion.

5. A push rivet according to claims 1 to 4, wherein the protection pieces have elasticity not to interfere with a deformation of the connected leg portion.

6. A push rivet according to claims 1 to 5, wherein the protection pieces are provided with projections on a lower surface of an upper portion side and on an upper surface of a lower portion side.

7. A push rivet according to claim 1, wherein the protection pieces are mutually connected, and integrally molded on the inside of the connected leg portion.
